# EUROPÄISCHE PATENTSCHRIFT

(11) **EP 2 164 616 B1**
(45) Veröffentlichungstag und Bekanntmachung des Hinweises auf die Patenterteilung: **29.12.2010**
(21) Anmeldenummer: 08773897.7
(22) Anmeldetag: 07.07.2008
(51) Int. Cl.: B01F 3/04, C02F 3/12, C02F 3/20

(54) **VERFAHREN ZUM DURCHMISCHEN UND/ODER BELÜFTEN VON FLÜSSIGKEITEN, INSBESONDERE VON ABWÄSSERN, MIT EINEM FLUTBAREN BELÜFTER**
METHOD FOR STIRRING AND/OR AERATING FLUIDS, PARTICULARLY SEWAGE, USING A FLOODABLE AERATOR
PROCÉDÉ DE MÉLANGE ET/OU D'AÉRATION DE LIQUIDES, EN PARTICULIER D'EAUX RÉSIDUAIRES, AU MOYEN D'UN AÉRATEUR POUVANT ÊTRE IMMERGÉ

(30) Priorität: 18.07.2007 DE 102007033483; 30.04.2008 DE 102008021649
(43) Veröffentlichungstag der Anmeldung: 24.03.2010
(73) Patentinhaber: Bioworks Verfahrenstechnik GmbH, 85640 Putzbrunn (DE)
(72) Erfinder: BUCH, Stephan, 55606 Hochstetten-Dhaun (DE); KRÖNER, Peter, 81827 München (DE)
(74) Vertreter: Wiese Konnerth Fischer Patentanwälte Partnerschaft
(86) Internationale Anmeldenummer: PCT/EP2008/005527
(87) Internationale Veröffentlichungsnummer: WO 2009/010204

(56) Entgegenhaltungen:
- EP-A- 0 249 172
- EP-A- 0 947 473
- CA-A1- 2 313 135
- FR-A- 2 802 524
- GB-A- 2 431 598
- US-A- 3 160 685
- US-A- 5 183 595
- US-A- 5 587 114
- US-A- 5 851 448
- US-A- 5 906 774
- US-A1- 2006 027 496

## Beschreibung

Die vorliegende Erfindung betrifft ein Verfahren zum Durchmischen von Flüssigkeiten, insbesondere von Abwässern, mit einem flutbaren Tauchbelüfter mit wenigstens einer an einem Träger angeordneten Belüftungseinrichtung.

Moderne Kläranlagen müssen zum Erreichen der geforderten Nitratgrenzwerte das Abwasser denitrifizieren. Die Denitrifikation, also die Abspaltung des am Nitrat gebundenen Sauerstoffes und dadurch Freisetzung molekularen Stickstoffes erfolgt über mehrere biologische Schritte durch dazu geeignete Bakterien (Denitrifikanten) im anoxischen Milieu, d. h. unter Abwesenheit gelösten Sauerstoffes im Reaktor.

Für eine optimale Denitrifikation ist zum einen eine intensive Durchmischung der Biomasse (Bakterien) mit dem Abwasser erforderlich, um die Grenzfläche zu vergrößern und das denitrifizierte Medium schnell abzuführen, zum anderen das Vorhandensein abbaubarer Kohlenstoffverbindungen erforderlich. Denn erst der aerobe C-Abbau "zwingt", vereinfacht gesagt, die Denitrifikanten dazu, sich den Sauerstoff aus dem Nitrat zu holen.

Dieser Vorgang wird zurzeit mit unterschiedlichen Verfahrensschritten durchgeführt, wobei grundsätzlich alle Verfahrensschritte durch die Schaffung eines anoxischen Milieus gekennzeichnet sind. Je nach Größe der Stickstoffzulaufkonzentrationen sind anoxische Volumina von bis zu 50 % des Gesamtreaktorvolumens erforderlich und üblich.

Die generelle Reinigungsaufgabe einer Kläranlage (Oxidation der Kohlenstoffprodukte, Oxidation des Ammoniums) erfordert jedoch ein grundsätzlich oxisches Milieu, in welchem die hauptsächliche Reinigung (Abbau der Kohlenstoffverbindungen und des Ammoniums) aerob erfolgt. In einem Reaktor mit überwiegend oxischem Milieu kann jedoch keine Denitrifikation stattfinden.

Daraus ergeben sich verschiedene Lösungsansätze, wobei beispielhaft die simultane Denitrifikation und die vor-, bzw. nachgeschaltete Denitrifikation genannt seien.

Bei der vorgeschalteten Denitrifikation wird üblicherweise der Rücklaufschlamm (Biomasse gemischt mit nitratreichem Ablaufwasser) in ein separates Becken geführt, wo er mit Zulaufwasser (kohlenstoffreich) vermischt wird.

Bei der simultanen Denitrifikation werden die Verfahrensschritte simultan in einem Reaktor durchgeführt, wobei die oxischen / anoxischen Volumina entweder räumlich (durch gezielte Drosselung der Belüftung werden Zonen im Becken geschaffen) oder zeitlich (zyklisches An - und Abschalten der Belüftung) voneinander getrennt sind. Es werden auch Kombinationen dieser Verfahrensweisen eingesetzt.

Bei der nachgeschalteten Denitrifikation wird, wie der Name schon sagt, der Denitrifikationsreaktor der eigentlichen Belebung nachgeschaltet. Alle drei Verfahren haben spezifische Vor- bzw. Nachteile, wobei eine nachgeschaltete Denitrifikation nicht mehr zeitgemäß ist.

Zusammenfassend lässt sich sagen, dass die simultane Denitrifikation die meisten Vorteile bietet. Hierzu ergeben sich nun folgende Überlegungen:

Ein Becken wird belüftet, es findet der normale C- und Ammonium-Abbau (Oxidation) statt. Soll nun simultan denitrifiziert werden, muss entweder die Belüftung lokal gedrosselt werden oder die Belüftung komplett ausgeschaltet werden. Um ein bestimmtes Reaktorvolumen umzuwälzen ist jedoch ein gewisser Mindestlufteintrag nötig, um die Biomasse in Schwebe zu halten und somit überhaupt erst eine Denitrifikation zu ermöglichen bzw. Ablagerungen zu verhindern.

Wird die Belüftung ganz abgestellt, müssen daher Rührwerke eingesetzt werden, um das Becken zu durchmischen, um den notwendigen Grenzflächenstoffaustausch zu gewährleisten. Dies ist in der Praxis so üblich. Wird die Belüftung nur gedrosselt, kann es jedoch sein, dass immer noch zuviel Sauerstoff eingetragen wird, also keine anoxischen Zonen entstehen und damit eine wirksame Denitrifikation nicht stattfinden kann. Dies ergibt sich vor allem dann, wenn der Abwasser-Zulauf schwach belastet ist (geringe Kohlenstoffkonzentrationen). Die zum Umwälzen benötigte Luftmenge ist dabei immer noch größer als die Luftmenge (bzw. der Sauerstoffbedarf), welche durch die Bakterien zur Oxidation benötigt wird.

Aus der europäischen Patentschrift EP 0 249 172 B1 (von Nordenskjöld) ist ein Verfahren zur Belüftung und Umwälzung von Abwasser und Belebtschlamm zum Zweck der Nitrifikation und Denitrifikation mittels einer Vielzahl von über dem Beckenboden bewegten Bodenbelüftern bekannt, welche periodisch über den Boden streichen. Hierbei werden zur Bildung von gering mit Luft beaufschlagten Abwasser- oder Belebtschlamm-Zonen bestimmte Bodenbelüfter gezielt mit reduzierter Luftzufuhr versorgt, um zonenweise eine Denitrifikation ermöglichende anoxische Zustände zu erreichen.

Diese Anordnung hat den Nachteil einer Vielzahl von anfälligen Bauteilen wie Quetschventilen etc.

Zur Belüftung und Bewegung von Abwässern sind aus dem Stand der Technik zahlreiche Mittel und Verfahren bekannt.

Aus der DE 196 21 116 C2 (Invent) z. B. ist ein Bodenverteiler für Gas, an den mindestens ein elastischer perforierter Schlauch anschließbar und mit dem Gas beaufschlagbar ist, bekannt, mit einem Hohlkörper, welcher mit einer Belüftungseinrichtung kommuniziert. Dieser Hohlkörper ist als Bodenverteiler für die Versorgung der Belüftungseinrichtung vorgesehen. Um eine derartige Vorrichtung beim Einsatz in Wasserreinigungsanlagen in Bodennähe zu halten und zu betreiben sind entsprechende Gewichte vorzusehen, um den durch die Hohlräume des Bodenverteilers verursachten Auftrieb zu kompensieren.

Aus der DE 40 01 201 C1 (von Nordenskjöld) ist ein Schwimmbelüfter für die Einleitung von Luft in ein Gewässer bekannt, welcher über Verbindungsleitungen sogenannte als Tauchbelüfter eingesetzte Bodenbelüfter mit Luft zur Belüftung eines Gewässers versorgt. Bodenbelüfter haben eine begrenzte Lebensdauer und sind darüber hinaus regelmäßig in bestimmten Reinigungsintervallen zu reinigen, bzw. zu überprüfen. Hierzu müssen die Bodenbelüfter, in der Regel während des Betriebs einer Reinigungs- oder Kläranlage, aus dem Becken herausgenommen werden. Da die Bodenbelüfter im Betrieb einen Auftrieb kompensieren müssen, sind diese regelmäßig mit Gewichten beschwert. Das Hochholen eines Bodenbelüfters ist eine schwierige Angelegenheit. Ein Bodenbelüfter ist beispielsweise aus einem Belebtschlammbecken einer Abwasserkläranlage an die Wasseroberfläche zu bringen, dort zu behandeln (Reinigung, Inspektion, evtl. Reparatur) und dann wieder abzusenken. Diese Aktion ist extrem aufwändig und kostenintensiv und auch für die ausführenden Personen gefährlich. Daneben werden die betreffenden Teile der Schwimmbelüfter oder Bodenbelüfter oder auch Tauchbelüfter stark belastet und beansprucht. Besonders bei mit Membranen bestückten Belüftern sind Beschädigungen an den empfindlichen Membranen nicht zu vermeiden.

Aus der US 5,906,774 (Parkson) ist ein Schwimmbelüfter mit einem über eine Stange verbundenen Tauchbelüfter bekannt, wobei im Bereich des Tauchbelüfters davon getrennte zusätzliche sogenannte aufblasbare Auftriebskörper angeordnet sind, welche das soeben beschriebene Problem beim Hochholen eines Tauchbelüfters lindem helfen sollen. Die Vorrichtung funktioniert derart, dass zum Hochholen der Tauchbelüfter zusätzlich angeordnete Auftriebskörper aufgeblasen werden und dabei helfen, den Tauchbelüfter an die Wasseroberfläche zu bringen. Dies erleichtert die Handhabung der Tauchbelüfter im Service sehr stark. Ein ganz besonderer Nachteil ist jedoch mit dieser Vorrichtung dadurch verbunden, dass die aufblasbaren Auftriebskörper zusätzliche in der Umgebung des Tauchbelüfters angeordnete Bauteile darstellen, die über ihre im nicht aufgeblasenen, wie im aufgeblasenen Zustand unhandliche Form hinaus verletzungsgefährdet sind und, sofern sie durch irgendwelche Gegenstände perforiert werden, vollständig ausfallen und ihre Funktion nicht mehr erfüllen können.

Die FR-A-2 802 524 offenbart einen Tauchbelüfter mit wenigstens einer an einem Träger angeordneten Belüftungseinrichtung, die dadurch gekennzeichnet ist, dass der Tauchbelüfter wenigstens einen flutbaren Hohlkörper aufweist, wobei der Träger als flutbarer Hohlkörper ausgebildet ist.

Beim Betrieb von Kläranlagen werden Schwimmbelüfter, das sind Schwimmer, an denen in das Wasser der Kläranlage eingetauchte Tauchbelüfter anhängen, zum Einblasen von Luft oder Gasen in das Wasser eingesetzt. Insbesondere bei Abwasserkläranlagen werden derartige Einrichtungen zum Belüften von Belebtschlammbecken eingesetzt. Eine andere Verwendung dient zur Sauerstoffanreicherung von Gewässern. In der im Prinzip bekannten Art und Weise wird hier ein Druckbelüftungssystem betrieben, bei dem atmosphärische Luft von Verdichtern angesaugt und über ein Verteilungsleitungssystem an die sogenannten Tauchbelüfter verteilt, deren Eigenschaft in der Regel darin besteht, die eingeblasene Luft in feinen Blasen abzugeben, welche vom Tauchbelüfter zur Wasseroberfläche streben und auf ihrem Weg Sauerstoff an das Wasser abgeben. Bei Anaerobverfahren werden die genannten Einrichtungen ebenfalls als Gaseinblasung nach dem gleichen Prinzip, insbesondere zur Umwälzung eingesetzt. Gegenüber bei klassischen Kläranlagen an den Beckenboden befestigten Belüfterelementen, besitzt eine schwimmende Belüftung besondere Vorteile. Aus diesem Grund hat sich die schwimmende Belüftung in der jüngeren Vergangenheit sehr stark durchgesetzt.

Mit der Zunahme der Größe von Einzelanlagen steigt auch die Anzahl von Belüfterelementen pro Anlage. Man spricht hier sehr schnell von mehreren tausend Belüfterelementen innerhalb einer Anlage. Es sind Vorrichtungen bekannt, bei denen einzelne sogenannte Belüfterkerzen zu Belüftern zusammengefasst werden und über Verbindungsleitungen, beispielsweise Schlauch- oder Rohrleitungen an einem schwimmenden Luftverteilrohr angehängt und in Bodennähe unter Wasser betrieben werden. Als Belüfterkerzen sind sogenannte Rohrbelüfter aus Polyester oder Keramik und perforierte Membranmaterialien bekannt, welche in der Regel auf Stützkörper aufgezogen sind. Belüfter mit perforierten Membranen haben sich in den letzten Jahren auf dem Markt durchgesetzt, da sie gegenüber allen anderen Belüftermaterialien die höchste Sauerstoffausnutzung ermöglichen. Darüber hinaus kommen sogenannte Platten- oder Tellerbelüfter zur Anwendung.

Die gestiegenen Anlagengrößen erfordern immer größere Einzelbecken und immer größere Wassertiefen, heute bis zu sechs Meter. Aus Wirtschaftlichkeitsgründen werden daher immer mehr Belüfterkerzen in einer Belüftungseinrichtung zusammengefasst. Ein wesentliches Merkmal eines funktionsfähigen "schwimmenden" Tauchbelüfters, bzw. einer schwimmenden Belüftung besteht darin, dass die unter Wasser eingesetzten Bauteile im Betrieb stabil in der Einsatzhöhe arbeiten und keinen zu hohen Auftrieb haben, der zu einem Aufschwimmen und damit zur Funktionsunfähigkeit des Tauchbelüfters führen würde. Ist beispielsweise der Auftrieb zu hoch, so geraten die Belüftereinrichtungen im Normalbetrieb in eine instabile Lage, was dazu führen kann, dass sie teilweise aufschwimmen, sich gegenseitig verhaken und den effektiven Betrieb einer gesamten Belüftungseinrichtung gefährden, oder sogar zum Erliegen bringen können. Darüber hinaus ist leicht nachvollziehbar, dass sich in einer derartigen Situation die Vorrichtungen, welche unkontrollierte Bewegungen durchführen, sich gegenseitig beschädigen. Der optimal konstruierte Tauchbelüfter besitzt gerade nur soviel Eigengewicht, dass einerseits die resultierende Kraft diesen im Betrieb in einer stabilen Lage hält. Andererseits sollte das Eigengewicht noch in einer Größenordnung liegen, die eine Handhabung für das Montage- und Betriebspersonal ermöglicht.

Die beschriebenen Belüftungseinrichtungen sind aufgrund ihres Einsatzes einem besonderen Verschleiß ausgesetzt. Sie sind in bestimmten Intervallen zu reinigen bzw. nach einer begrenzten Lebensdauer der Membran sind diese auszutauschen. Hierzu muss man die Belüftungseinrichtungen, bzw. die Tauchbelüfter, auf denen diese sitzen, aus dem Wasser an die Wasseroberfläche bringen. Dies geschieht in der Regel bei vollem Betrieb der Anlage, da die Anlage nicht abgeschaltet werden kann. Das Herausholen von Belüftern aus dem Wasser ist eine kostenintensive, schwierige und verletzungsträchtige Angelegenheit. In der Regel sind hierzu mehrere Personen erforderlich. Eine besondere Schwierigkeit ergibt sich dadurch, dass alle unter Wasser befindlichen Oberflächen aufgrund eines schleimartigen "biologischen" Bewuchses sehr rutschig sind. Dies erschwert die Handhabung der Schwimmbelüfter zusätzlich. Daneben werden die Belüfter und die Zusatzeinrichtungen beim Herausziehen häufig derart beansprucht, dass sich Materialschäden wie Abknicken von Schläuchen, Bruch von Schlauchanschlussteilen sowie Beschädigungen der Belüftermembran ergeben können. Eine besonders nachteilige Folge kann sich bei zu langem Handling eines einzelnen Schwimmbelüfters, bzw. Tauchbelüfters ergeben, nämlich dadurch, dass sich die ansonsten von diesem Tauchbelüfter bearbeitete Wasserzone mit Belebtschlamm zusetzt, mit der Gefahr, dass dieser Belebtschlamm geschädigt wird und dadurch der gesamte biologische Prozess in Mitleidenschaft gezogen wird.

Es ist eine Aufgabe der Erfindung, ein Verfahren vorzuschlagen, mit dem die aus dem Stand der Technik bekannten Nachteile vermieden oder zumindest stark verringert werden.

Die Aufgabe wird gelöst mit einem Verfahren zum Durchmischen und/oder Belüften von Flüssigkeiten, insbesondere Abwässern, mit folgenden sich zyklisch wiederholenden Schritten a) und b):
a) Belüften der Flüssigkeit mittels eines Tauchbelüfters über eine vorbestimmte erste Zeitdauer (t1), mit wenigstens einer, an einem als flutbarer Hohlkörper ausgebildeten Träger angeordneten, Belüftungseinrichtung, wobei der Hohlkörper geflutet wird und durch die Belüftungseinrichtung Luft in die Flüssigkeit eingebracht wird, wodurch die Möglichkeit einer Nitrifikation in der Flüssigkeit geschaffen wird,
b) Durchmischen der Flüssigkeit mittels des Tauchbelüfters über eine vorbestimmte zweite Zeitdauer (t2), wobei die Luftzufuhr durch die Belüftungseinrichtung gedrosselt oder abgestellt wird, und wobei der zuvor geflutete Hohlkörper mittels einer Druckluftversorgung zur Füllung des Hohlkörpers mit Gas oder Luft evakuiert wird, wodurch der Tauchbelüfter die Funktion einer Mischeinrichtung übernimmt, in der Flüssigkeit nach oben steigt und hierbei die Flüssigkeit durchmischt, wobei die Möglichkeit einer Denitrifikation in der Flüssigkeit geschaffen wird.

Die Vorteile des erfindungsgemäßen Verfahrens bestehen u. a. darin, dass nach einer bestimmten Zeitdauer einer Belüftung eine unbelüftete Zeitdauer folgt, in der im betreffenden Bereich der Flüssigkeit eine anoxische Zone geschaffen wird, da dort die Belüftung komplett abgestellt wird. Stattdessen wird eine Durchmischungsphase durch zyklisches Fluten und Evakuieren des Hohlkörpers eingestellt. Aufgrund des zyklischen Flutens und Evakuierens des Hohlkörpers wird eine ständige Aufund-Ab-Bewegung des Belüfters erreicht, durch welche eine Durchmischung der Flüssigkeit erzeugt wird.

Während der dabei recht heftigen Bewegung der Flüssigkeit evtl. austretende Luft ist für den Sauerstoffgehalt der Flüssigkeit vernachlässigbar, da einerseits die Luftmenge wesentlich geringer ist als bei normaler Belüftung und andererseits die ggf. austretende Luft so grobblasig ist, dass kaum ein Sauerstoffübertrag stattfindet, also der anoxische Zustand nicht gefährdet wird. Es ist dem Fachmann bekannt, wie oben bereits ausführlich beschrieben, dass zur Denitrifikation anoxische Zustände vorliegen müssen, die aber auch wieder von oxischen Zuständen abgelöst werden müssen, um eine Nitrifikation zu ermöglichen.

In einer vorteilhaften Weiterbildung des Verfahrens werden die erste und die zweite Zeitdauer (t1, t2) über eine Steuerung geregelt. Daraus ergibt sich der Vorteil, dass eine exakt auf die jeweilige Belastung der Flüssigkeit abgestellte Denitrifikation erreicht werden kann.

Der Tauchbelüfter weist wenigstens einen flutbaren Hohlkörper auf, wobei der Träger als flutbarer Hohlkörper ausgebildet ist. Das erfindungsgemäße Verfahren bietet eine Reihe von Vorteilen. Der als flutbarer Hohlkörper ausgebildete Träger für die Belüftungseinrichtung hilft entscheidend dabei, den Auftrieb des Tauchbelüfters zu verringern, wenn er im Betrieb mit Wasser gefüllt ist. Dadurch ist es teilweise auch möglich, zusätzliche Gewichte für den Tauchbelüfter, welche den Auftrieb desselben so kompensieren sollen, dass er in seiner Arbeitshöhe gleichermaßen schwebt, weg zu lassen, bzw. zu minimieren, damit das Eigengewicht des Tauchbelüfters nicht zu groß wird.

In einer vorteilhaften Ausbildung der Erfindung ist der flutbare Hohlkörper als langgestrecktes Rohr ausgebildet. Dadurch ergibt sich der Vorteil, dass kostengünstige Standardteile zur Herstellung des erfindungsgemäßen Tauchbelüfters eingesetzt werden können.

Eine vorteilhafte Ausbildung der Erfindung ist **dadurch gekennzeichnet, dass** der als flutbarer Hohlkörper ausgebildete Träger des Tauchbelüfters als rechteckiges, rundes oder elliptisches Rohr ausgebildet ist. Dadurch lässt sich vorteilhafterweise eine individuelle Anpassung des Tauchbelüfters an bevorzugte Belüftungseinrichtungen erreichen.

In einer vorteilhaften Ausbildung der Erfindung ist der flutbare Hohlkörper mit einer Druckluftversorgung zur Füllung des Hohlkörpers mit Gas oder Luft ausgestattet. Mit dieser Vorrichtung lässt sich die erfindungsgemäße Vorrichtung besonders einfach an die Wasseroberfläche bringen. Der geflutete Hohlkörper wird zu diesem Zweck mit Druckluft versorgt und das darin befindliche Wasser entfernt, um aufgrund des nun nicht mehr gefluteten Hohlkörpers das Auftauchen des Tauchbelüfters zu veranlassen. Die Druckluftversorgung kann alternativ von einer Druckluftquelle auf einem Wartungsboot, von einer eigens hierzu eingerichteten Versorgung in der Anlage oder über entsprechende Nutzung der zur Belüftung des Wassers verwendeten Luft geleistet werden.

In einer vorteilhaften Ausbildung der Erfindung ist der Träger des erfindungsgemäßen Tauchbelüfters wenigstens teilweise mit einer, diesen umschließenden perforierten, Membran und einer Gaszuführung von Gas zwischen dem Träger und der Membran ausgestattet. Hiermit lassen sich in vorteilhafter Weise bereits aus dem Stand der Technik bekannte Belüftungseinrichtungen, insbesondere kombiniert mit der vorliegenden Erfindung wesentlich einfacher realisieren. Der als langgestrecktes Rohr ausgebildete Träger bildet mit seiner Außenwand gleichsam eine Wandung der Luftführung der Belüftungsvorrichtung, deren andere Wandung durch eine poröse Membran, welche gegenüber dem Träger, abgesehen von den Poren, gasdicht abgedichtet ist.

In einer vorteilhaften Ausführung der Erfindung weist der Hohlkörper des Tauchbelüfters wenigstens ein in einem ersten Endbereich des Hohlkörpers angeordnetes erstes Endteil mit einem ersten Kanal zur Versorgung der Belüftungseinrichtung und einen zweiten Kanal zur Druckluftversorgung zur Füllung des Hohlkörpers mit Gas oder Luft auf. Es gibt eine Reihe von aus dem Stand der Technik bekannten Methoden, Einblaseinrichtungen unterhalb des Wasserspiegels höhenkonstant anzuordnen. Die Ausgestaltung der erfindungsgemäßen Vorrichtung ermöglicht denen gegenüber jedoch eine teilearme und montagefreundliche Konstruktion. Dies bringt enorme Kostenvorteile und auch Zeitvorteile bei der Montage sowie beim Service des Tauchbelüfters mit sich.

In einer ganz besonders vorteilhaften Ausbildung der Erfindung ist der Tauchbelüfter **dadurch gekennzeichnet, dass** er ein in dem, dem ersten Endbereich des Hohlkörpers gegenüberliegenden zweiten Endbereich des Hohlkörpers angeordnetes zweites Endteil mit einem Zufuhrkanal zur Versorgung der Belüftungseinrichtung mit Gas oder Luft und einen Auslasskanal aufweist. Dadurch lässt sich vorteilhafterweise die Luftzufuhr im gleichen Zeitraum bei gleichen Geschwindigkeiten erhöhen z. B. verdoppeln.

In einer weiteren vorteilhaften Ausbildung der Erfindung ist der Tauchbelüfter **dadurch gekennzeichnet, dass** er über wenigstens zwei Abhängevorrichtungen aufgehängt ist. Dadurch kann er exakt waagerecht hängend eingestellt werden, was die Gleichmäßigkeit der Blasenbildung bei der Belüftung begünstigt.

In einer weiteren vorteilhaften Ausbildung der Erfindung ist der Tauchbelüfter **dadurch gekennzeichnet, dass** wenigstens eine der Abhängevorrichtungen als Versorgungsleitung für die Belüftungseinrichtung ausgebildet ist. Damit ergibt sich der Vorteil, dass die Anordnung vereinfacht wird und die Gefahr von Verwicklungen von Abhängevorrichtungen und Versorgungseinrichtungen gemindert wird.

In noch einer weiteren vorteilhaften Ausbildung der Erfindung ist der Tauchbelüfter **dadurch gekennzeichnet, dass** der Auslasskanal im Einsatzzustand in der Nähe des Bodens des Hohlkörpers angeordnet ist. Dies erleichtert beim Evakuieren des Tauchbelüfters vorteilhafterweise das Austreiben von im Hohlkörper befindlichem Fluid und verhindert eine Kurzschlussströmung des zum Austreiben eingesetzten Gases oberhalb des Bodens des Hohlkörpers.

In einer vorteilhaften Ausbildung der Erfindung ist der erste Kanal des Endteils mit Rückschlagklappen versehen, welche eine Flüssigkeitsströmung, etwa die Strömung des Abwassers durch den ersten Kanal, aus dem Hohlkörper hinaus verhindern. Damit ist die Sicherheit in vorteilhafter Weise derart gesteigert, dass in die Luftversorgung zur Belüftungseinrichtung keine unerwünschten Materialien gelangen können.

In einer vorteilhaften Ausbildung der Erfindung ist der Tauchbelüfter durch ein Zusatzgewicht gekennzeichnet. Dies erlaubt eine individuelle Anpassung der erfindungsgemäßen Vorrichtung an die jeweils erforderlichen Konditionen, bzw. Randbedingungen, welche vom Abwasser und auch von der jeweiligen Einsatzsituation des Tauchbelüfters ausgehen.

In einer vorteilhaften Ausbildung der Erfindung ist der Tauchbelüfter durch einen als flacher Zylinder ausgebildeten Hohlkörper gekennzeichnet, an dessen Zylinderumfangswandfläche sternförmig angeordnete, nach außen ragende Belüftungseinrichtungen, beispielsweise in Form von Belüfterkerzen und dergleichen angeordnet sind. Diese erfindungsgemäße Ausbildung des Tauchbelüfters ermöglicht den Einsatz des erfindungsgemäßen Prinzips, auch bei figürlich anders gestalteten Tauchbelüftern, insbesondere auch solchen, die dezentral als Einzelbelüfter eingesetzt werden.

In einer vorteilhaften Ausbildung des erfindungsgemäßen Tauchbelüfters ist dieser durch einen als flacher Zylinder ausgebildeten Hohlkörper gekennzeichnet, an dessen Zylinderdachfläche Belüftungseinrichtungen angebracht sind. Auch hier ist wie beim zuvor beschriebenen Ausführungsbeispiel eine individuelle Anpassung der erfindungsgemäßen Vorrichtung an vorgegebene, möglicherweise bereits bestehende Systeme möglich, wobei hier die überragenden Vorteile der erfindungsgemäßen Vorrichtung, nämlich das problemlose Herausheben eines Tauchbelüfters besonders zum Tragen kommen.

In einer vorteilhaften Ausbildung der Erfindung ist ein Tauchbelüfter **dadurch gekennzeichnet, dass** der flutbare Hohlkörper als langgestrecktes Rohr ausgebildet ist, an dessen Außenwand sich im Wesentlichen senkrecht hierzu wegerstreckende Belüftungseinrichtungen angebracht sind. Hier gilt ebenfalls die vorteilhafte Auswirkung der beiden zuvor beschriebenen Beispiele, nämlich die Anpassung und Integration der erfindungsgemäßen Vorrichtung an bzw. in bereits bestehende Anlagen, bzw. die Kombination der erfindungsgemäßen Vorrichtung mit möglicherweise anderen Vorteilen der beschriebenen Anordnungsvarianten, Hohlkörpern und Belüftungseinrichtungen.

Weitere Merkmale und Vorteile der Erfindung sind den Unteransprüchen zu entnehmen.

Zum besseren Verständnis der Erfindung wird diese im Folgenden unter Zuhilfenahme einer Zeichnung anhand einiger Beispiele näher beschrieben.
- Fig. 1: zeigt ein stark schematisiertes Ausführungsbeispiel eines Tauchbelüfters in Teilschnittdarstellung.
- Fig. 2: zeigt den Tauchbelüfter nach Fig. 1 in perspektivischer Ansicht.
- Fig. 3: zeigt ein weiteres Ausführungsbeispiel eines Tauchbelüfters stark schemati- siert in perspektivischer Darstellung.
- Fig. 4: zeigt in perspektivischer Darstellung ebenfalls stark schematisiert ein weite- res Beispiel eines Tauchbelüfters.
- Fig. 5: zeigt in schematisch beispielhafter Darstellung den Tauchbelüfter nach Fig. 4 in einer Schnittdarstellung.
- Fig. 6: zeigt ein weiteres Ausführungsbeispiel eines Tauchbelüfters.
- Fig. 7: zeigt ein weiteres Ausführungsbeispiel eines Tauchbelüfters.
- Fig. 8: zeigt wesentliche Merkmale des Tauchbelüfters nach Fig. 7 in perspektivi- scher Ansicht.
- Fig. 9: zeigt ein weiteres Ausführungsbeispiel eines Tauchbelüfters.
- Fig. 10: zeigt noch ein weiteres Ausführungsbeispiel eines Tauchbelüfters.

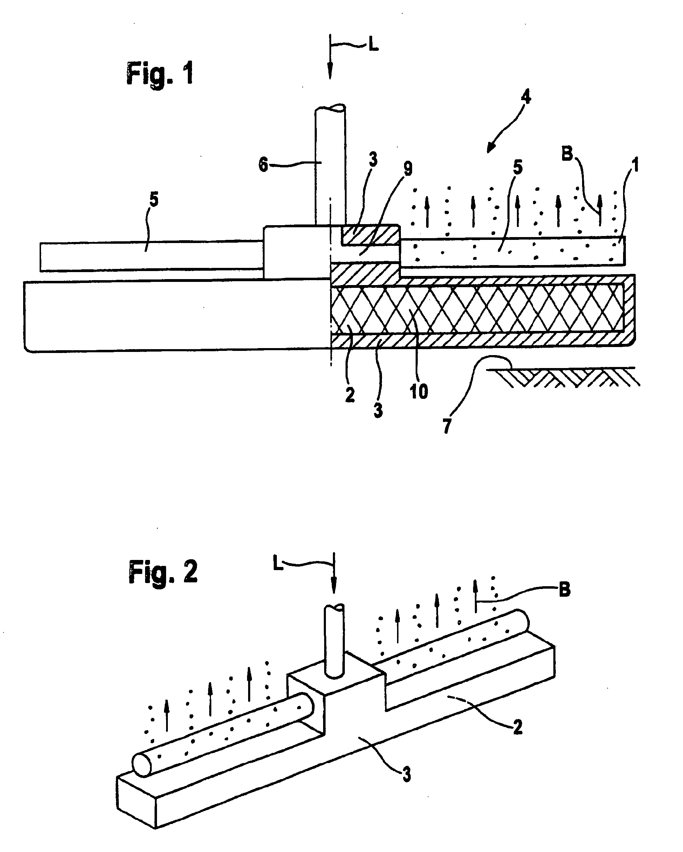

Fig. 1 zeigt stark schematisiert einen Tauchbelüfter 4 mit einem Träger 3, an welchem eine Belüftungseinrichtung 1 angebracht ist. Der Träger 3 ist als flutbarer Hohlkörper 2 ausgebildet, wobei zum besseren Verständnis der Hohlraum 10 des flutbaren Hohlkörpers 2 dieser hier und im weiteren Verlauf dieser Beschreibung rautiert dargestellt ist. Über eine Gaszuführung 6 wird beispielsweise Luft in Richtung des Pfeils L in den Tauchbelüfter gefördert und über den Träger 3 der Belüftungseinrichtung 1 zugeführt. Im Bereich der Belüftungseinrichtung 1 symbolhaft angegebene Pfeile B sollen den Weg von aus der Belüftungseinrichtung 1 an die Wasseroberfläche steigenden Luftblasen andeuten. Der als flutbarer Hohlkörper 2 ausgebildete Träger 3 ist wie in den Fig. 1 und 2 dargestellt hier als länglicher Quader aufgeführt. Die rautiert schraffierte Fläche im Hohlkörper 2 kann im Betrieb des Tauchbeiüfters mit Flüssigkeit gefüllt, bzw. geflutet werden. Dadurch verringert sich der Auftrieb des erfindungsgemäßen Tauchbelüfters in dem Maße, in dem die Flutung des Hohlkörpers 2 vorgenommen wird. Angestrebt ist eine stabile Position vorzugsweise in der Nähe des schematisch dargestellten Bodens 7.

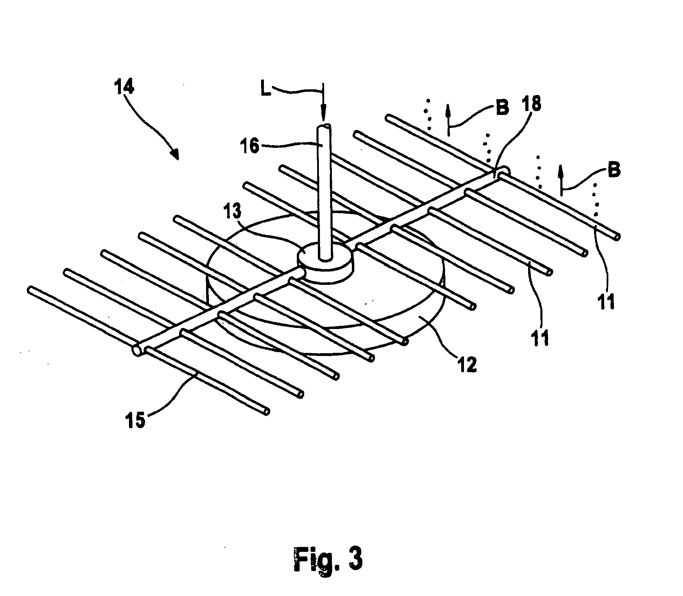

Fig. 3 zeigt noch ein Ausführungsbeispiel eines Tauchbelüfters. Hier ist ein Träger 13 zu erkennen, welcher mit einem flachzylindrischen Hohlkörper als flutbarem Hohlkörper 12 integriert ausgebildet ist. An einer Traverse 18, welche wie in Fig. 3 dargestellt ist am Träger 13 Luft führend angebracht ist, sind Belüftungseinrichtungen 11 mit schematisch dargestellten handelsüblichen Belüfterkerzen 15 ausgestattet. Der besondere Vorteil dieser Anordnung besteht darin, dass ein flutbarer Hohlkörper 12 für eine ganze Batterie von Belüfterkerzen 15 dient. Im Prinzip ist die Luftführung in die Belüftungseinrichtungen 11 analog der Gasversorgung gemäß dem Ausführungsbeispiel nach den Fig. 1 und 2 gedacht. So werden die Belüftungseinrichtungen 11 jeweils auch wieder über eine Gaszuführung 16 in Richtung des Pfeils L mit Luft versorgt, welche in Richtung der Pfeile B aus der Belüftungseinrichtung 11 austretende Luftblasen, bzw. deren Weg an die Wasseroberfläche symbolisieren sollen.

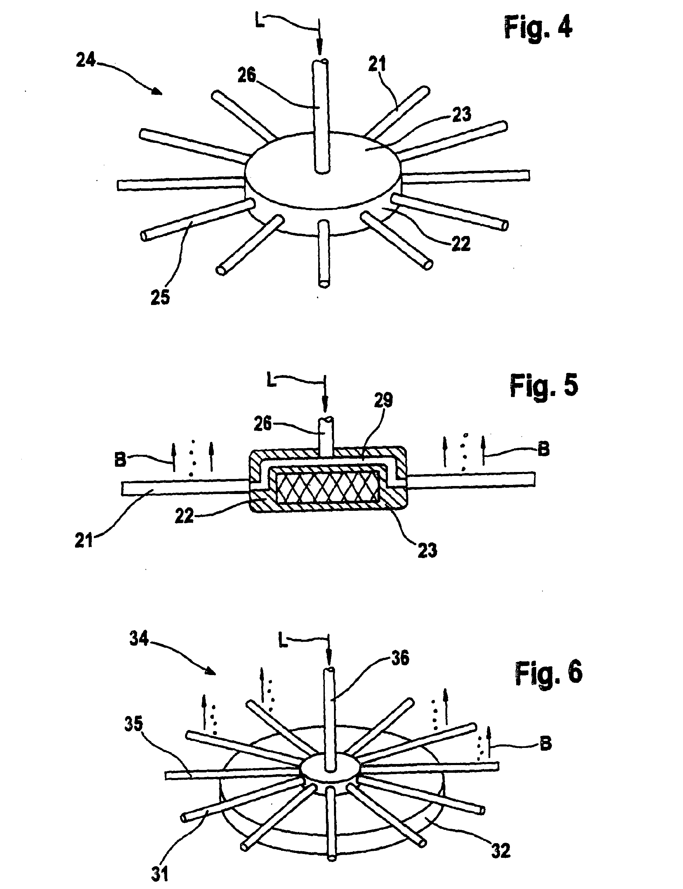

Fig. 4 zeigt ein weiteres Ausführungsbeispiel eines Tauchbelüfters 24, welcher einen zentralen Träger 23, bzw. zentralen Hohlkörper 22 aufweist, an dem sternförmig angeordnete Belüftungseinrichtungen 21 angeordnet sind. Über eine Gasversorgungsleitung 26 werden die Belüftungseinrichtungen 21 sternförmig mit Belüftungsgas versorgt. Zum besseren Verständnis dieser in Fig. 4 perspektivisch angedeuteten Ausführung der Erfindung ist in Fig. 5 eine schematische Schnittdarstellung des Tauchbelüfters gemäß Fig. 4 gezeigt. Über die Gaszuführung 26 strömt Luft über einen Luftkanal 29 in die Belüftungseinrichtung 21, um in Richtung der Pfeile B wieder an die Wasseroberfläche zu gelangen.

Fig. 6 zeigt ein weiteres Ausführungsbeispiel in Form eines sternförmigen Tauchbelüfters 36. Prinzipiell ist die Funktion der einzelnen Bauteile analog den zuvor beschriebenen Beispielen aus den Fig. 3 und 4 nachzuvollziehen. Auch ist der zur Fig. 3 erwähnte besondere Vorteil dieser Konstruktion in Form einer Vielzahl von Belüftungseinrichtungen kombiniert mit einem einzigen flutbaren Hohlkörper 32 zu erkennen.

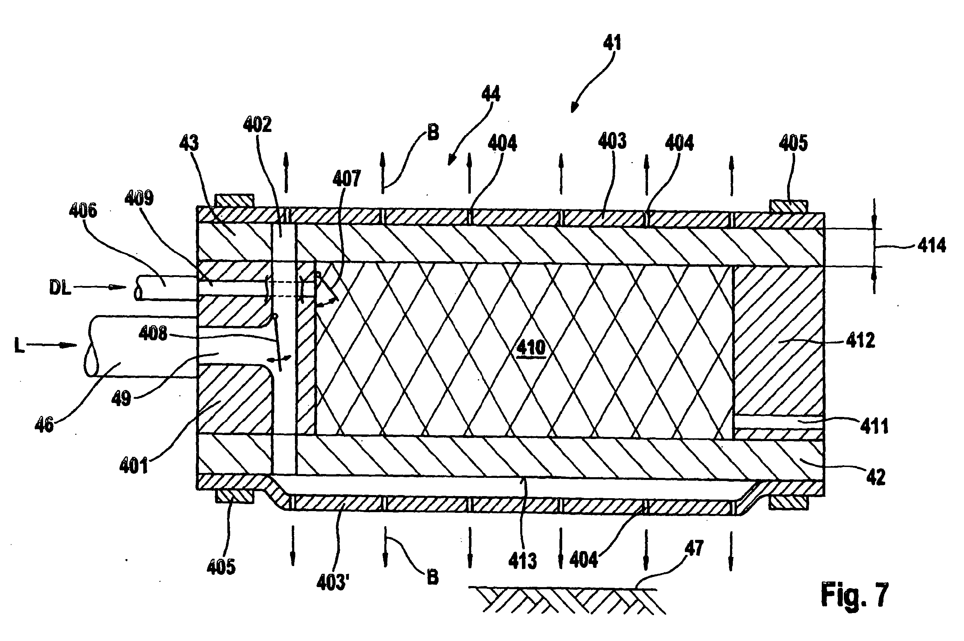

Fig. 7 zeigt ein weiteres Ausführungsbeispiel eines Tauchbelüfters 44 mit einem Träger 43, welcher gleichzeitig die Funktion eines flutbaren Hohlkörpers 42 hat. Eine Gaszuführung 46 mündet über eine hier nicht näher beschriebene Kupplung in ein Endteil 401, welcher die in Fig. 7 linke Seite des Tauchbelüfters 41 im Innenbereich des Trägers 43, welcher auch den Hohlkörper 42 bildet, dicht abschließt. Das Endteil 401 hat einen Gaszuführungskanal 49, über welchen Luft durch Bohrungen 402 im Träger 43 zwischen die Außenwand 413 des Trägers 43 und eine die Außenwand 413 umgebende Membran 403 geleitet wird, durch welche die Luft über Poren 404 entweichen und in Richtung der Pfeile B nach oben zur Wasseroberfläche gelangen kann. Schellen 405 befestigen durch Klemmung die Membran 403 auf dem Außenmantel des beispielhaft zylindrisch ausgebildeten Trägers 43, bzw. Hohlkörpers 42. Im Inneren 410 des Hohlkörpers 42 ist der flutbare Bereich rautiert schraffiert dargestellt. Eine Druckluftversorgung 406 mündet ebenfalls im Endteil 401 in einen Kanal 409, über welchen der Hohlraum 410 des Hohlkörpers 42 mit Druckluft gefüllt werden kann. Die sich im Hohlraum 410 befindliche Flüssigkeit wird über einen Auslasskanal 411, welcher auf der rechten Seite des in Fig. 7 dargestellten Tauchbelüfters 41 in einem Endteil 412 angeordnet ist, ausgetrieben. Leitet man nun entsprechend dem Pfeil DL über den Kanal 406 sowie den Kanal 409 im Endteil 401 Druckluft in den Innenraum 410 des Tauchbelüfters 41, so wird sich im Raum 410 befindende Flüssigkeit durch einen Auslasskanal 411 ausgetrieben und der Hohlraum 410 evakuiert. Damit steigt die Auftriebskraft des Tauchbelüfters 41 derart, dass er an die Wasseroberfläche steigt.

Aufgrund der Konstruktion des Tauchbelüfters lässt sich dieser erfindungsgemäß per "Aufpumpen" oder Entleeren des flutbaren Hohlkörpers mittels Druckluft problemlos an die Wasseroberfläche bringen und warten. Nach Beendigung der Wartung wird der Tauchbelüfter wieder in das Wasser gegeben, und der Hohlkörper flutet von selbst: Der Tauchbelüfter sinkt wieder in seine Einsatzstellung ab.

Schematisch ist in Fig. 7 noch der Beckenboden 47 angedeutet, in dessen Nähe der Einsatzort des Tauchbelüfters 41 im Betrieb vorgesehen ist. Abhängig von der Dicke 414 und dem Gewicht der Wandung des Hohlkörpers 42, bzw. auch des Materials des Hohlkörpers 42 und des Volumens des Hohlraums 410 lässt sich der gewünschte Auftrieb des Tauchkörpers 41 einstellen.

Zur Vereinfachung der Darstellung extrem überzeichnet ist auf der Unterseite des Tauchbelüfters 41 die Position der Membran 403' "im Belüftungsbetrieb" dargestellt, welche sich bei Beaufschlagung der Druckluftzuführung mit Druckluft in dieser Situation aufgrund des sich zwischen der Außenfläche 413 des Hohlkörpers 42 und der Membran 403 aufbauenden Überdrucks einstellt. Die Poren 404 der elastischen Membran 403 öffnen sich und entlassen über Pfeile B Luft aus dem Tauchbelüfter 41.

An den Gaszuführungskanälen 409 und 49 des Endteils 401 können wahlweise Rückschlagklappen 407 und/oder 408 angebracht werden, um einen Rückfluss von Flüssigkeit aus dem Hohlraum 410 in die Zufuhrkanäle 409, bzw. 49 damit auch eine Verschmutzung der entsprechenden Luftleitungen 406 und 46 zu verhindern.

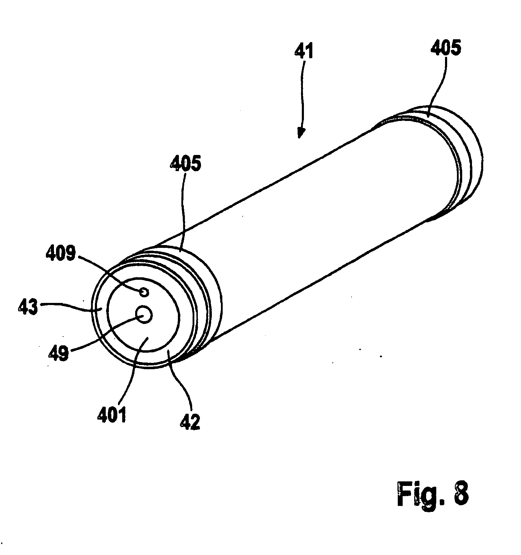

Fig. 8 zeigt wesentliche Merkmale des Tauchbelüfters 41 nach Fig. 7 in perspektivischer Ansicht.

Selbstverständlich kann das erfindungsgemäße Prinzip auch in Form von Tellerbelüftern Verwendung finden, die entsprechend den im Detail zum Ausführungsbeispiel gemäß Fig. 7 erläuterten Konstruktionsmerkmalen realisiert werden. Die Einsatzmöglichkeit des Prinzips des erfindungsgemäß eingesetzten Tauchbelüfters lässt zahllose Variationsmöglichkeiten zu.

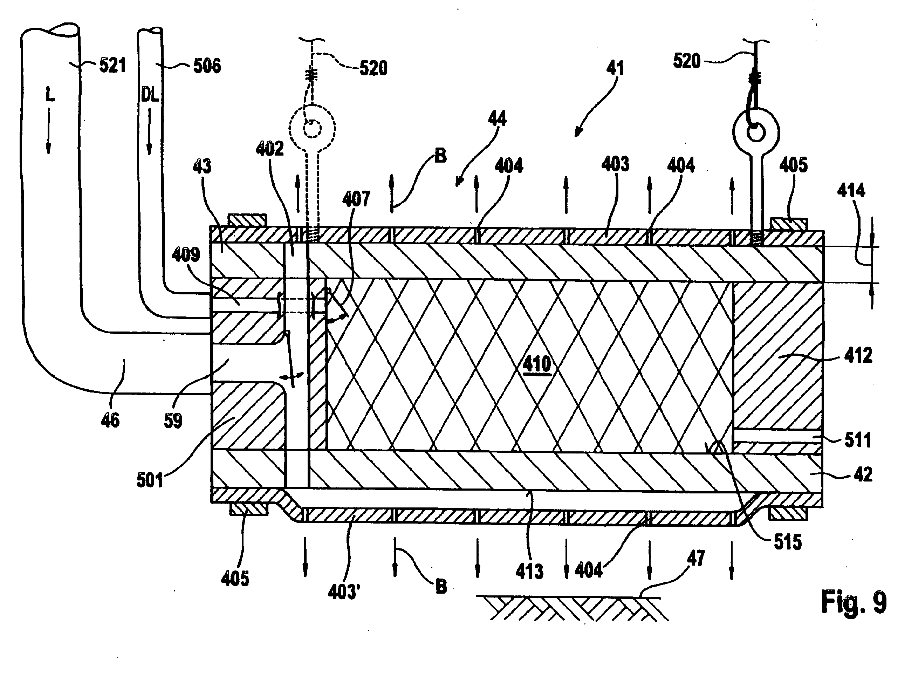

Der in Fig. 9 gezeigte Tauchbelüfter weist auf der in der Zeichnung linken Seite eine Versorgungsleitung 521 auf, die üblicherweise nach oben, beispielsweise zu einer (nicht gezeigten) Lufteinspeisung in Richtung des Pfeils L führt. Eine Druckluftleitung 506 versorgt den Hohlraum mit Luft, um diesen zum Anheben des Tauchbelüfters mit Gas oder Luft zu füllen und das darin befindliche Fluid zu evakuieren. Der Tauchbelüfter kann von durchgezogen oder gestrichelt gezeichneten Abhängevorrichtungen 520 hängend getragen werden. Es ist jedoch auch möglich, den Tauchbelüfter allein von der Versorgungsleitung 521 und einer Abhängevorrichtung 520 oder nur von zwei Versorgungsleitungen 521 tragen zu lassen.

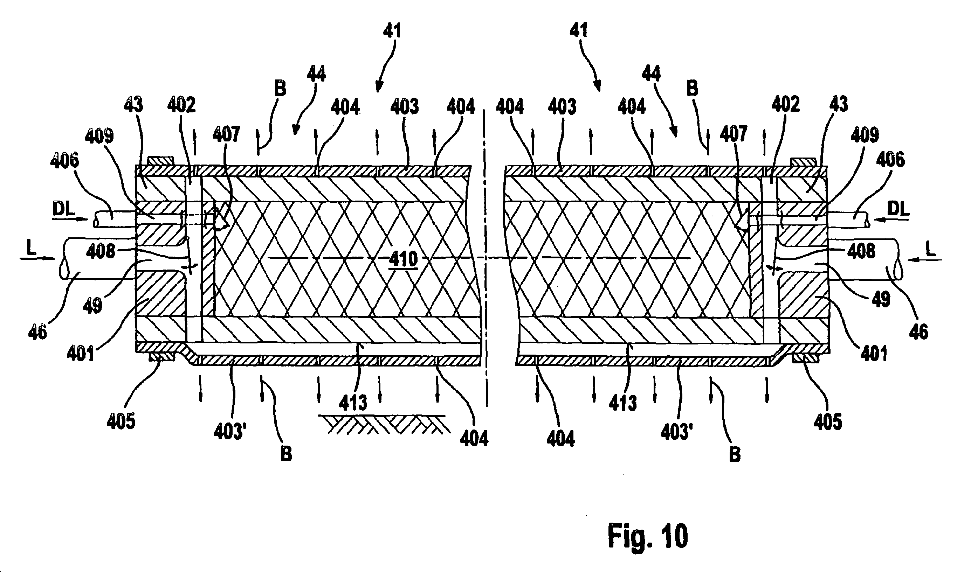

In Fig. 10 ist ein weiterer Tauchbelüfter - aus Platzgründen in der Mitte durchgebrochen dargestellt - gezeigt, der im Vergleich zu dem Tauchbelüfter nach Fig. 7 und 8 von beiden Enden über Gaszuführungen 46 mit einer Lufteinspeisung L ausgestattet ist. Auslasskanäle für das auszutreibende Fluid können an geeigneter Stelle an einem Endbereich angebracht werden, z. B. wie in Fig. 7 und 8 gezeigt und hierzu beschrieben ist. Selbstverständlich können an diesem Tauchbelüfter nach (nicht gezeigte) Fig. 10 Abhängevorrichtungen wie zuvor beschrieben angebracht werden.

Der Durchmischungsvorgang im Wechsel mit dem Belüftungsvorgang geht folgendermaßen vor sich.

Wird nach in bekannter Weise laufender Belüftung eine Denitrifikationsphase gewünscht, so wird zur Einleitung einer anoxischen Phase in einer Zone um den Tauchbelüfter die Belüftung eingestellt, indem die Lufteinspeisung via Kanäle 46, 49 über die Versorgungsleitung(en) 521 abgestellt wird. Dann wird der Hohlraum 410 durch Zufuhr von Druckluft über die Leitungen 406 und 409 gefüllt und das dort befindliche Fluid, in der Regel Flüssigkeit, wie Wasser oder Abwasser über den Auslasskanal 411, 511 ausgetrieben. Hierbei hebt sich der Tauchbelüfter auf der Seite, auf der die Luftzufuhrleitung am Tauchbelüfter angebracht ist, kippt weiter in die Senkrechte und stellt sich schließlich senkrecht auf, während er zur Wasseroberfläche strebt. Dies ist dieselbe Vorgehensweise wie sie zur Inspektion eines Tauchbelüfters durchgeführt wird. Oben angekommen wird die Druckluftzufuhr in den Hohlkörper abgestellt, was dazu führt, dass sich der Hohlkörper über den Auslasskanal 411, 511 wieder mit Flüssigkeit füllt, dadurch schwerer wird und mit sich verringerndem Auftrieb absinkt. Ist der Tauchbelüfter in seiner durch die Abhängevorrichtungen begrenzte tiefste Position abgesunken, wird der Vorgang wiederholt, d. h. erneutes Evakuieren des Hohlraums 410 mit der Folge, dass der Tauchbelüfter wieder aufsteigt.

Die anoxische Phase für die Denitrifikation wird also erfindungsgemäß dadurch erzeugt, dass durch wechselndes Fluten und Entleeren des Hohlkörpers des Tauchbelüfters dieser ständig im Wechsel aufsteigt und absinkt und damit zum Rührwerk "umfunktioniert" wird.

Durch diese Bewegung des Tauchbelüfters, der hiermit eigentlich nur noch eine Rührfunktion übernimmt, wird das Wasser durchmischt und ein Absetzen von Schlamm verhindert.

Zum Beenden der Denitrifikation wird dieser Vorgang beendet, der Tauchbelüfter geflutet und in seiner "Tiefstellung" wieder mit Luft zur Belüftung der Flüssigkeit beaufschlagt.

### Bezugszeichen

- 1, 11, 21, 31: Belüftungseinrichtung
- 2, 12, 22, 32, 42: flutbarer Hohlkörper
- 3, 13, 23, 33: Träger
- 4, 14, 24, 34, 41, 44: Tauchbelüfter
- 5, 15, 25, 35: Belüfterkerze oder Membranbelüfter
- 6, 16, 26, 36, 46: Gaszuführung
- 7, 47: Boden
- 9, 29: Luftkanal
- 10: Hohlraum
- 18: Traverse
- 49: erster Zufuhrkanal
- 59: zweiter Zufuhrkanal
- 401: erstes Endteil
- 402: Kanal
- 403, 403': Membran
- 404: Pore
- 405: Schelle
- 406: Druckluftzuführung
- 407: Rückschlagklappe
- 408: Rückschlagklappe
- 409: Kanal
- 410: Hohlraum
- 411: Auslasskanal
- 412: Endteil
- 413: zylindrische Außenwand
- 414: Wanddicke
- 415: Boden
- 501: Endteil
- 502: Kanal
- 509: Kanal
- 511: Auslasskanal
- 515: Boden
- 520: Abhängevorrichtung
- 521: Versorgungsleitung
- B: Pfeil Blasenbewegungsrichtung
- L: Pfeil Luftzufuhrrichtung
- DL: Pfeil Druckluftzufuhrrichtung

## Patentansprüche

1. Verfahren zum Durchmischen und/oder Belüften von Flüssigkeiten, insbesondere Abwässern, mit folgenden sich zyklisch wiederholenden Schritten a) und b):
a) Belüften der Flüssigkeit mittels eines Tauchbelüfters über eine vorbestimmte erste Zeitdauer (t1), mit wenigstens einer, an einem als flutbarer Hohlkörper (2, 42) ausgebildeten Träger (3, 43) angeordneten, Belüftungseinrichtung (1), wobei der Hohlkörper (2, 42) geflutet wird und durch die Belüftungseinrichtung Luft in die Flüssigkeit eingebracht wird, wodurch die Möglichkeit einer Nitrifikation in der Flüssigkeit geschaffen wird,
b) Durchmischen der Flüssigkeit mittels des Tauchbelüfters über eine vorbestimmte zweite Zeitdauer (t2), wobei die Luftzufuhr durch die Belüftungseinrichtung (1) gedrosselt oder abgestellt wird, und wobei der zuvor geflutete Hohlkörper mittels einer Druckluftversorgung zur Füllung des Hohlkörpers (2, 42) mit Gas oder Luft evakuiert wird, wodurch der Tauchbelüfter die Funktion einer Mischeinrichtung übernimmt, in der Flüssigkeit nach oben steigt und hierbei die Flüssigkeit durchmischt, wobei die Möglichkeit einer Denitrifikation in der Flüssigkeit geschaffen wird.

2. Verfahren nach Anspruch 1, **dadurch gekennzeichnet, dass** die erste und die zweite Zeitdauer (t1, t2) über eine Steuerung geregelt werden.

3. Verfahren nach Anspruch 1 oder 2, **dadurch gekennzeichnet, dass** der Tauchbelüfter wenigstens eine an einem Träger (3, 43) angeordneten Belüftungseinrichtung (1) sowie wenigstens einen flutbaren Hohlkörper (2, 42) aufweist, wobei der Träger (3, 43) als flutbarer Hohlkörper (2, 42) ausgebildet ist.

4. Verfahren nach Anspruch 3, **dadurch gekennzeichnet, dass** der flutbare Hohlkörper (2, 42) als langgestrecktes Rohr ausgebildet ist.

5. Verfahren nach Anspruch 4, **dadurch gekennzeichnet, dass** der flutbare Hohlkörper (2) als rechteckiges, rundes oder elliptisches Rohr ausgebildet ist.

6. Verfahren nach einem der Ansprüche 3 bis 5, **dadurch gekennzeichnet, dass** der flutbare Hohlkörper (2) mit einer Druckluftversorgung zur Füllung des Hohlkörpers (2) mit Gas oder Luft ausgestattet ist.

7. Verfahren nach einem der Ansprüche 3 bis 6, **gekennzeichnet,** dass der Tauchbelüfter eine den Träger (3, 43) wenigstens teilweise umschließende perforierte Membran (403) und eine Gaszuführung (402) zur Zuführung von Gas zwischen Träger (42) und Membran (403) aufweist.

8. Verfahren nach Anspruch 7, **dadurch gekennzeichnet, dass** der Tauchbelüfter wenigstens ein in einem ersten Endbereich des Hohlkörpers (2) angeordnetes erstes Endteil (401) einen ersten Kanal (49) zur Versorgung der Belüftungseinrichtung (1) und einen zweiten Kanal (409) zur Druckluftversorgung zur Füllung des Hohlkörpers (2, 42) mit Gas oder Luft, sowie in einem zweiten dem ersten Endteil gegenüberliegenden Endteil einen Auslasskanal (411) zum Austreiben von im Hohlkörper befindlichem Fluid aufweist.

9. Verfahren nach Anspruch 8, **dadurch gekennzeichnet, dass** der Tauchbelüfter ein in dem, dem ersten Endbereich des Hohlkörpers (2) gegenüberliegenden zweiten Endbereich des Hohlkörpers (2) angeordnetes zweites Endteil mit einen Zufuhrkanal (59) zur Versorgung der Belüftungseinrichtung (1) mit Gas oder Luft und einen Auslasskanal (511) aufweist.

10. Verfahren nach Anspruch 8 oder 9, **dadurch gekennzeichnet, dass** der Tauchbelüfter über wenigstens zwei Abhängevorrichtungen (520) aufgehängt ist.

11. Verfahren nach Anspruch 10, **dadurch gekennzeichnet, dass** wenigstens eine der Abhängevorrichtungen als Versorgungsleitung (521) für die Belüftungseinrichtung (1) ausgebildet ist.

12. Verfahren nach einem der Ansprüche 9 bis 11, **dadurch gekennzeichnet, dass** der Airslasskanal (411) des Tauchbelüfters im Einsatzzustand in der Nähe des Bodens des Hohlkörpers angeordnet ist.

13. Verfahren nach einem der Ansprüche 8 bis 12, **dadurch gekennzeichnet, dass** der erste Kanal (49) und / oder der zweite Kanal (409) des Tauchbelüfters mit Rückschlagklappen (407, 408) versehen sind, welche eine Flüssigkeitsströmung durch den ersten oder zweiten Kanal (409) aus dem Hohlkörper (2) hinaus verhindern.

14. Verfahren nach einem der Ansprüche 3 bis 13, **gekennzeichnet,** dass der Tauchbelüfter ein Zusatzgewicht aufweist.

15. Verfahren nach einem der Ansprüche 3 bis 14, **gekennzeichnet,** dass der Tauchbelüfter einen als flacher Zylinder ausgebildeten Hohlkörper (2) aufweist, an dessen Zylinderumfangswandfläche sternförmig angeordnete nach außen ragende Belüftungseinrichtungen (21, 31) angebracht sind.

16. Verfahren nach einem der Ansprüche 3 bis 15, **gekennzeichnet,** dass der Tauchbelüfter einen als flacher Zylinder ausgebildeten Hohlkörper (2) aufweist, an dessen Zylinderdachfläche Belüftungseinrichtungen angebracht sind.

17. Verfahren nach einem der Ansprüche 4 bis 15, **dadurch gekennzeichnet, dass** der flutbare Hohlkörper als langgestrecktes Rohr ausgebildet ist, an dessen Außenwand, sich im Wesentlichen senkrecht hierzu weg erstreckende Belüftungseinrichtungen (11) angebracht sind.

## Claims

1. A process for liquor - particularly wastewater - agitation and/or aeration having the following cyclically repeated steps a) and b):
a) aerating the liquor by means of an immersed aerator for a predetermined first period of time (t1) using a diffuser (1) disposed on a carrier (3, 43) designed as a floodable hollow body (2, 42), the hollow body (2, 42) being flooded and air being brought into the liquor by the diffuser, making it possible to create nitrification in the liquor;
b) agitating the liquor by means of the immersed aerator for a predetermined second period of time (t2), the air feed by the diffuser (1) being throttled or turned off, and the previously flooded hollow body being evacuated in order to fill the hollow body (2, 42) with gas or air, the immersed aerator assuming the function of an agitator in which liquor rises upward, thus agitating the liquor, making denitrification possible in the liquor.

2. The process as set forth in claim 1, **characterized in that** said first and second periods of time (t1, t2) are timed by a controller.

3. The process as set forth in claim 1 or 2, **characterized in that** said immersed aerator (1) comprises at least one floodable hollow body (2, 42) as formed by the carrier (3, 43).

4. The process as set forth in claim 3, **characterized in that** said floodable hollow body (2, 42) is configured as an elongated tube.

5. The process as set forth in claim 4, **characterized in that** said floodable hollow body (2) is configured as a tube of rectangular, round or elliptic cross-section.

6. The process as set forth in any of the claims 3 to 5, **characterized in that** said floodable hollow body (2) is equipped with a compressed air feeder for filling the hollow body (2) with gas or air.

7. The process as set forth in any of the claims 3 to 6, **characterized in that** said immersed aerator (1) comprises a perforated membrane (403) enveloping the carrier (3, 43) at least partly and a gas feeder (402) for feeding gas between the carrier (42) and the membrane (403).

8. The process as set forth in claim 7, **characterized in that** said immersed aerator (1) comprises a first end part (401) disposed in a first end portion of the hollow body (2) with a first passageway (49) for feeding compressed air to the diffuser (1), and a second passageway (409) for feeding compressed air to fill the hollow body (2, 42) with gas or air as weii as an outlet passageway (411) disposed in a second end portion opposite the first end portion for evacuating the liquor contained in the hollow body.

9. The process as set forth in claim 8, **characterized in that** said immersed aerator (1) comprises, disposed in a second end portion opposite the first end portion of the hollow body (2), a second end part with a feeder passageway (59) for feeding the diffuser (1) with gas or air and an outlet passageway (511).

10. The process as set forth in claim 8 or 9, **characterized in that** said immersed aerator is suspended by at least two suspension devices (520).

11. The process as set forth in claim 10, **characterized in that** at least one of said suspension devices is configured as a feeder (521) for the diffuser (1).

12. The process as set forth in any of the claims 9 to 11, **characterized in that** said outlet passageway (411) is disposed near to the bottom of the hollow body operationally.

13. The process as set forth in any of the claims 8 to 12, **characterized in that** said first passageway (49) and/or said second passageway (409) are/is provided with non-return valves (407, 408) preventing a liquor flow through the first or second passageway (409) from the hollow body (2).

14. The process as set forth in any of the claims 3 to 13, **characterized in that** said immersed aerator comprises a ballast weight.

15. The process as set forth in any of the claims 3 to 14, **characterized in that** said immersed aerator comprises a hollow body (2) configured as a shallow cylinder whose circumferential wall forms a hub mounting the spoked arrangement of the diffusers.

16. The process as set forth in any of the claims 3 to 15, **characterized in that** said immersed aerator comprises a hollow body (2) configured as a shallow cylinder with diffusers topping the cylinder.

17. The process as set forth in any of the claims 4 to 15, **characterized in that** said floodable hollow body is configured as an elongated tube, from the outer wall of which diffusers (11) extend substantially perpendicular thereto.

## Revendications

1. Procédé pour mélanger et/ou aérer des liquides, en particulier des eaux usées, comprenant les étapes se répétant cycliquement a) et b) suivantes :
a) aération du liquide au moyen d'un aérateur immergé pendant un premier laps de temps prédéterminé (t1), présentant au moins un dispositif d'aération (1) agencé sur un support (3, 43) réalisé sous forme de corps creux pouvant être noyé, où le corps creux (2, 42) est noyé et de l'air est introduit dans le liquide par le dispositif d'aération, ce qui crée la possibilité d'une nitrification dans le liquide,
b) mélange du liquide au moyen de l'aérateur immergé pendant un deuxième laps de temps prédéterminé (t2), où l'alimentation en air par le dispositif d'aération (1) est étranglée ou arrêtée et où le corps creux noyé au préalable est vidé au moyen d'une alimentation en air comprimé destinée au remplissage du corps creux (2, 42) avec du gaz ou de l'air, suite à quoi l'aérateur immergé assure la fonction d'un dispositif de mélange, dans lequel du liquide monte et mélange ainsi le liquide, ce qui crée la possibilité d'une dénitrification du liquide.

2. Procédé selon la revendication 1, **caractérisé en ce que** le premier et le deuxième laps de temps (t1, t2) sont réglés via un dispositif de commande.

3. Procédé selon la revendication 1 ou 2, **caractérisé en ce que** l'aérateur immergé présente au moins un dispositif d'aération (1) agencé sur un support (3, 43) ainsi qu'au moins un corps creux pouvant être noyé (2, 42), le support (3, 43) pouvant être réalisé sous forme de corps creux pouvant être noyé (2, 42).

4. Procédé selon la revendication 3, **caractérisé en ce que** le corps creux pouvant être noyé (2, 42) est réalisé sous forme d'un tuyau allongé.

5. Procédé selon la revendication 4, **caractérisé en ce que** le corps creux pouvant être noyé (2) est réalisé sous forme d'un tuyau rectangulaire, rond ou elliptique.

6. Procédé selon l'une quelconque des revendications 3 à 5, **caractérisé en ce que** le corps creux pouvant être noyé (2) est équipé d'une alimentation en air comprimé destinée au remplissage du corps creux (2) avec du gaz ou de l'air.

7. Procédé selon l'une quelconque des revendications 3 à 6, **caractérisé en ce que** l'aérateur immergé présente une membrane (403) perforée entourant au moins partiellement le support (3, 43) et une alimentation en gaz (402) destinée à alimenter du gaz entre le support (42) et la membrane (403).

8. Procédé selon la revendication 7, **caractérisé en ce que** l'aérateur immergé présente au moins une première partie d'extrémité (401) agencée dans une première zone d'extrémité du corps creux (2) avec un premier canal (49) destiné à l'alimentation du dispositif d'aération (1) et un deuxième canal (409) destiné à l'alimentation en air comprimé pour le remplissage du corps creux (2, 42) avec du gaz ou de l'air, ainsi que, dans une deuxième partie d'extrémité opposée à la première partie d'extrémité, un canal d'évacuation (411) pour chasser le fluide se trouvant dans le corps creux.

9. Procédé selon la revendication 8, **caractérisé en ce que** l'aérateur immergé présente une deuxième partie d'extrémité agencée dans la deuxième zone d'extrémité du corps creux (2) opposée à la première zone d'extrémité du corps creux (2), présentant un canal d'alimentation (59) destiné à l'alimentation du dispositif d'aération (1) en gaz ou en air et un canal d'évacuation (511).

10. Procédé selon la revendication 8 ou 9, **caractérisé en ce que** l'aérateur immergé est suspendu via au moins deux dispositifs de suspension (520).

11. Procédé selon la revendication 10, **caractérisé en ce qu'**au moins un des dispositifs de suspension est réalisé comme conduite d'alimentation (521) pour le dispositif d'aération (1).

12. Procédé selon l'une quelconque des revendications 9 à 11, **caractérisé en ce que** le canal d'évacuation (411) de l'aérateur immergé est agencé, dans l'état d'utilisation, à proximité du fond du corps creux.

13. Procédé selon l'une quelconque des revendications 8 à 12, **caractérisé en ce que** le premier canal (49) et/ou le deuxième canal (409) de l'aérateur immergé est/sont pourvu(s) de clapets anti-retour (407, 408), qui empêchent un flux de liquide du corps creux (2) au travers du premier ou du deuxième canal (409).

14. Procédé selon l'une quelconque des revendications 3 à 13, **caractérisé en ce que** l'aérateur immergé présente un poids supplémentaire.

15. Procédé selon l'une quelconque des revendications 3 à 14, **caractérisé en ce que** l'aérateur immergé présente un corps creux (2) réalisé sous forme de cylindre plat, sur la surface enveloppante cylindrique duquel sont agencés des dispositifs d'aération (21, 31) disposés en étoile, pointant vers l'extérieur.

16. Procédé selon l'une quelconque des revendications 3 à 15, **caractérisé en ce que** l'aérateur immergé présente un corps creux (2) réalisé sous forme de cylindre plat, sur la surface du toit du cylindre duquel sont agencés des dispositifs d'aération.

17. Procédé selon l'une quelconque des revendications 4 à 15, **caractérisé en ce que** le corps creux pouvant être noyé est réalisé sous forme de tube allongé, sur la paroi extérieure duquel sont disposés des dispositifs d'aération (11) s'écartant de manière essentiellement perpendiculaire par rapport à celle-ci.
